# FASCICULE DE BREVET EUROPEEN

(11) **EP 2 098 073 B1**
(45) Date de publication et mention de la délivrance du brevet: **14.08.2019**
(21) Numéro de dépôt: 07872422.6
(22) Date de dépôt: 20.12.2007
(51) Int. Cl.: H04N 21/2347, H04N 21/2389, H04N 21/266, H04N 21/4147, H04N 21/4385, H04N 21/4405, H04N 21/4623, H04N 21/4627, H04N 21/8355, H04N 21/845, G11B 20/00, H04N 7/167

(54) **PROCÉDÉ DE GESTION DU NOMBRE DE VISUALISATIONS, PROCESSEUR DE SECURITÉ ET TERMINAL POUR CE PROCÉDÉ**
VERFAHREN ZUR VERWALTUNG EINER ANZAHL VON VISUALISIERUNGEN, SICHERHEITSPROZESSOR UND ENDGERÄT FÜR DIESES VERFAHREN
METHOD FOR MANAGING THE NUMBER OF VISUALISATIONS, SECURITY PROCESSOR AND TERMINAL FOR SAID METHOD

(30) Priorité: 21.12.2006 FR 0611194
(43) Date de publication de la demande: 09.09.2009
(73) Titulaire: Viaccess, 92057 Paris La Defense Cedex (FR)
(72) Inventeur: PLESSE, Emmanuel, 35410 Chateaugiron (FR)
(74) Mandataire: Lavoix
(86) Numéro de dépôt international: PCT/FR2007/002137
(87) Numéro de publication internationale: WO 2008/096066

(56) Documents cités:
- EP-A- 1 182 874
- EP-A1- 1 422 943
- WO-A-01/47266
- WO-A-03/075571
- "Système d'accès conditionnel pour systèmes de diffusion numérique" UTE C90-007, vol. C90, no. 7, janvier 1994 (1994-01), pages 1-145, XP008082249

## Description

La présente invention concerne un procédé de gestion du nombre de visualisations, un processeur de sécurité et un terminal pour ce procédé.

Il existe des procédés de gestion du nombre de visualisations d'un contenu audiovisuel. Ces procédés comportent, par exemple :
- la fourniture d'un contenu audiovisuel numérique enregistré sur un support d'enregistrement d'informations, ce contenu étant divisé en plusieurs segments temporels consécutifs et destinés à être lus automatiquement dans un ordre prescrit,
- la fourniture d'un nombre de visualisations autorisées de ce contenu audiovisuel,
- la lecture du contenu audiovisuel enregistré, à l'aide d'un lecteur électronique, le lecteur électronique permettant notamment des sauts en arrière pour lire un segment précédent avant que la fin du contenu audiovisuel ne soit atteinte,
- le calcul du nombre de visualisations du contenu audiovisuel déjà effectuées, et
- l'interdiction de toute nouvelle visualisation du contenu audiovisuel si le nombre de visualisations déjà effectuées est supérieur ou égal au nombre de visualisations autorisées et, dans le cas contraire, l'autorisation d'une nouvelle visualisation du contenu audiovisuel dans son ensemble.

Les contenus audiovisuels numériques sont, par exemple, des vidéogrammes tels que des films ou une émission télévisée.

Un segment correspond à une suite ordonnée et consécutive d'images et/ou de sons. Ce segment est enregistré dans un format adapté pour être lu par le lecteur électronique puis visualisé sur un écran. Lors de la visualisation sur un écran, les images et sons d'un segment s'enchaînent les uns après les autres à une fréquence supérieure ou égale à 50 Hz de manière à créer une impression de continuité visuelle et auditive entre les différentes images et sons d'un même segment.

On dit que deux segments sont consécutifs, si lors de la lecture de ces segments dans l'ordre prescrit, le laps de temps qui sépare l'instant où le segment précédent cesse d'être joué de l'instant où le segment suivant commence à être joué est inférieur à 1/50 seconde. Ainsi, lorsque deux segments sont consécutifs, une continuité visuelle et auditive est assurée entre ces deux segments pour l'usager.

Ces procédés de gestion sont particulièrement utiles pour limiter le nombre de fois qu'un usager peut visualiser un contenu audiovisuel enregistré.

Le document EP 1 182 874 décrit un procédé d'accès conditionnel à des contenus audiovisuels, avec une limitation du nombre de visualisations autorisées
On remarque ici que l'on limite le nombre de fois où le contenu audiovisuel peut être visualisé en utilisant un calcul du nombre de fois où l'usager a déjà visualisé le contenu audiovisuel. Cette première approche est à distinguer d'une seconde approche concurrente visant elle aussi à limiter le nombre de fois où le contenu est visualisable. Cette approche concurrente autorise au départ une durée de visualisation DVA. Ensuite, la durée DVA est décrémentée proportionnellement au temps de visualisations effectuées du contenu audiovisuel. Cette approche concurrente est simple, car il suffit de mesurer le temps de visualisation. Toutefois, elle est très peu flexible, en particulier, il est très difficile en mesurant uniquement le temps de visualisations déjà écoulé de tenir compte des différentes possibilités de visualisations du contenu audiovisuel rendues possibles par les sauts en arrière ou, au contraire, en avant, qui peuvent être réalisés sous la commande de l'utilisateur.

Potentiellement, le dénombrement du nombre de visualisations du contenu audiovisuel ne présente pas l'inconvénient de cette approche concurrente. Toutefois, à cause de la possibilité d'effectuer des sauts en arrière et, éventuellement, en avant, il existe un grand nombre de stratégies différentes pour calculer le nombre de visualisations déjà effectuées.

Par exemple, on peut décider que le contenu audiovisuel a été visualisé une fois lorsque chacun de ses segments a été visualisé au moins une fois. Cette stratégie est très permissive puisqu'elle permet en outre à un usager de
visualiser autant de fois qu'il le veut un segment donné en revenant systématiquement en arrière après la visualisation de ce segment.

Une stratégie un peu moins permissive consiste à incrémenter un compteur à chaque fois qu'un segment du contenu audiovisuel est visualisé. Ce
compteur est ensuite comparé à un seuil prédéterminé. Si le seuil est dépassé, le nombre de visualisations déjà effectuées est incrémenté de un. Avec cette stratégie, l'usager ne peut plus visualiser autant de fois qu'il veut le même segment sans que le nombre de visualisations déjà effectuées ne soit incrémenté. Par contre, à l'inverse, le nombre de visualisations déjà effectuées peut être incrémenté même si certains segments n'ont jamais encore été visualisés.

Il est donc souhaitable de proposer un procédé de gestion du nombre de visualisations qui soit suffisamment flexible pour permettre l'implémentation de nouvelles stratégies de calcul du nombre de visualisations déjà effectuées sans entraîner de modifications importantes du procédé.

L'invention vise à satisfaire ce souhait. Elle a donc pour objet un procédé de gestion du nombre de visualisations d'un contenu audiovisuel comportant :
- la fourniture d'un tableau contenant autant de cellules que de segments temporels, chaque cellule étant associée de façon biunivoque à un segment respectif du contenu audiovisuel, chaque cellule étant apte à contenir un nombre,
- lorsqu'un segment du contenu audiovisuel est lu par le lecteur électronique, l'incrémentation ou la décrémentation d'un pas prédéterminé du nombre contenu dans la cellule associée à ce segment, et
- le calcul du nombre de visualisations déjà effectuées réalisé à partir des nombres enregistrés dans chacune des cellules du tableau.

Dans le procédé ci-dessus, le tableau permet de mémoriser une représentation du nombre de fois que chaque segment du contenu audiovisuel a été visualisé. En particulier, le contenu de ce tableau permet en outre de déceler l'utilisation de sauts en arrière. La granulométrie des informations contenues dans ce tableau est donc suffisante pour pouvoir mettre en oeuvre un grand nombre de stratégies différentes de calcul du nombre de visualisations déjà effectuées. Le procédé est donc suffisamment flexible pour que chaque opérateur ou fournisseur de contenu audiovisuel puisse définir sa propre stratégie de calcul du nombre de visualisations déjà effectuées.

Toutefois, en cas de changement de stratégie de calcul, seuls la façon de calculer le nombre de visualisations déjà effectuées et/ou le pas prédéterminé d'incrémentation ou de décrémentation doivent être modifiés sans qu'il soit nécessaire de modifier les opérations de gestion et de mise à jour du tableau. Les modifications à apporter au procédé de gestion sont donc limitées.

Les modes de réalisation de ce procédé peuvent comporter une ou plusieurs des caractéristiques suivantes :
- l'enregistrement dans une mémoire non volatile d'une licence de visualisation multiple, cette licence comportant au moins :
   - le nombre de visualisations autorisées,
   - le tableau contenant les cellules associées de façon biunivoque aux segments temporels du contenu audiovisuel,
   - une redondance cryptographique, telle qu'une signature réalisée à l'aide d'une clé cryptographique, d'au moins une partie de chacune des informations précédentes,
- la vérification de la redondance cryptographique avant chaque nouvelle utilisation du lecteur pour visualiser le contenu audiovisuel, et
- l'interdiction de toute nouvelle visualisation dans le cas où la redondance cryptographique n'a pas pu être vérifiée correctement ;
- la licence comporte un identifiant T_Anti_Reuse de son utilisation précédente,
- un processeur de sécurité équipé de moyens de stockage d'informations contenant :
   - une clé cryptographique utilisable pour vérifier la redondance cryptographique de la licence et/ou une clé cryptographique permettant de réaliser la redondance cryptographique de la licence, et
   - un identifiant C_Anti_Reuse de l'utilisation précédente de la licence,
- après chaque utilisation du lecteur pour visualiser le contenu audiovisuel, les identifiants T_Anti_Reuse et C_Anti_Reuse sont modifiés pour que leurs nouvelles valeurs respectives correspondent, et
- avant chaque nouvelle utilisation du lecteur pour visualiser le contenu audiovisuel, la visualisation du contenu audiovisuel est autorisée uniquement si la valeur de l'identifiant T_Anti_Reuse correspond à la valeur de l'identifiant C_Anti_Reuse ;
- la sélection d'un algorithme de calcul du nombre de visualisations effectuées à exécuter lors du calcul du nombre de visualisations, en fonction du contenu de la licence, parmi un ensemble de plusieurs algorithmes de calcul différents susceptibles d'être exécutés, deux algorithmes de calcul étant considérés comme différents s'il existe un même contenu des cellules du tableau à partir duquel les deux algorithmes donnent des résultats différents ;
- la fourniture de plusieurs contenus audiovisuels différents et de plusieurs licences ayant chacune un identifiant de contenu audiovisuel qui la relie de façon biunivoque à un seul des contenus audiovisuels, et
- lors du calcul du nombre de visualisations déjà effectuées, seules les informations contenues dans la licence contenant l'identifiant du contenu audiovisuel actuellement lu est utilisée pour le calcul du nombre de visualisations déjà effectuées ;
- la fourniture d'un processeur de sécurité apte à traiter des messages ECM (Entitlement Control Message) et EMM (Entitlement Management Message),
- la transmission de la licence sous la forme d'un message EMM au processeur de sécurité, ce message EMM contenant un identifiant de l'unique processeur de sécurité auquel il est adressé ;
- différents segments du contenu audiovisuel sont embrouillés avec différents mots de contrôle, le procédé comportant pour chaque segment :
- la transmission d'au moins un message ECM à un processeur de sécurité, chaque message ECM contenant :
   - un cryptogramme du mot de contrôle nécessaire pour désembrouiller au moins une partie de ce segment du contenu audiovisuel, et
   - un identifiant de la cellule du tableau qui doit être incrémentée ou décrémentée quand ce message ECM est utilisé pour obtenir le mot de contrôle nécessaire au désembrouillage de ce segment du contenu audiovisuel,
- l'incrémentation ou décrémentation du nombre contenu dans la cellule correspondante à l'identifiant de cellule contenue dans le message ECM,
- le déchiffrement, par le processeur de sécurité, du mot de contrôle contenu dans le message ECM transmis, et
- la transmission du mot de contrôle déchiffré à un désembrouilleur pour désembrouiller au moins une partie du segment du contenu audiovisuel ;
- le calcul du nombre de visualisations déjà effectuées comporte :
   - la détermination du nombre de cellules du tableau contenant un nombre qui a été incrémenté ou décrémenté depuis la dernière visualisation du contenu audiovisuel, et
   - le calcul du nombre de visualisations déjà effectuées en fonction du résultat de cette détermination ;
- lors du calcul du nombre de visualisations déjà effectuées, le pas prédéterminé utilisé pour incrémenter ou décrémenter le nombre contenu dans la cellule associée à un segment décroît ou croît en fonction du nombre de fois où ce segment a déjà été visualisé.

Ces modes de réalisation du procédé présentent en outre les avantages suivants :
- la conservation des informations nécessaires au calcul du nombre de visualisations déjà effectuées dans une licence signée rend la falsification de ces informations difficile,
- la comparaison des identifiants T_Anti_Reuse et C_Anti_Reuse empêche qu'une licence puisse être réinitialisée dans un état précédent,
- la possibilité de sélectionner différents algorithmes de calcul du nombre de visualisations déjà effectuées permet d'utiliser différentes stratégies de contrôle du nombre de visualisations pour différents contenus audiovisuels,
- l'utilisation d'un identifiant de contenu audiovisuel dans chaque licence permet de gérer individuellement le calcul du nombre de visualisations pour chacun des contenus audiovisuels,
- la transmission de la licence sous la forme d'un message EMM limite les adaptations à apporter au processeur de sécurité pour qu'il puisse recevoir et traiter la licence,
- la présence d'un identifiant de la cellule du tableau qui doit être incrémenté ou décrémenté dans le message ECM contenant le cryptogramme du mot de contrôle simplifie grandement la gestion du tableau par le processeur de sécurité,
- incrémenter le nombre de visualisations déjà effectuées en fonction du nombre de cellules du tableau qui ont été modifiées depuis la dernière visualisation du contenu audiovisuel permet de tenir compte de la proportion du contenu audiovisuel qui a été visualisé pour incrémenter ou décrémenter le nombre de visualisations déjà effectuées, et
- faire varier le pas d'incrément ou de décrément en fonction du nombre de fois où le segment a déjà été visualisé permet d'attribuer une importance différente à la première visualisation d'un segment par rapport aux visualisations suivantes de ce même segment.

L'invention a également pour objet un processeur de sécurité contenant des instructions pour l'exécution du procédé de gestion ci-dessus lorsque ces instructions sont exécutées par un calculateur électronique.

Enfin, l'invention a également pour objet un terminal de lecture d'un contenu audiovisuel, ce terminal comportant :
- un support d'enregistrement d'informations contenant le contenu audiovisuel numérique enregistré, ce contenu étant divisé en plusieurs segments temporels consécutifs et destinés à être lus automatiquement dans un ordre prescrit,
- un nombre entier de visualisations autorisées pour ce contenu audiovisuel,
- un lecteur électronique de contenus audiovisuels permettant notamment des sauts en arrière pour lire un segment précédent avant que la fin du contenu audiovisuel ne soit atteinte,
- le terminal étant apte :
   - à calculer le nombre de visualisations de ce contenu audiovisuel déjà effectuées, et
   - à interdire toute nouvelle visualisation du contenu audiovisuel si le nombre de visualisations déjà effectuées est supérieur ou égal au nombre de visualisations autorisées et, dans le cas contraire, à autoriser une nouvelle visualisation du contenu audiovisuel dans son ensemble,
- le terminal comprend un tableau contenant autant de cellules que de segments temporels, chaque cellule étant associée de façon biunivoque à un

segment respectif du contenu audiovisuel, chaque cellule étant apte à contenir un nombre, et
- le terminal est apte :
   - lorsqu'un segment du contenu multimédia est lu par le lecteur électronique, à incrémenter ou à décrémenter d'un pas prédéterminé le nombre contenu dans la cellule associée à ce segment, et
   - à calculer le nombre de visualisations déjà effectuées à partir des nombres enregistrés dans chacune des cellules de ce tableau.

L'invention sera mieux comprise à la lecture de la description qui va suivre, donnée uniquement à titre d'exemple non limitatif et faite en se référant aux dessins sur lesquels :
- la figure 1 est une illustration schématique d'un terminal de lecture de contenus audiovisuels numériques enregistrés,
- la figure 2 est une illustration schématique d'un contenu audiovisuel visualisable à l'aide du terminal de la figure 1,
- la figure 3 est une illustration schématique d'un ECM (Entitlement Control Message) enregistré avec le contenu audiovisuel de la figure 2,
- la figure 4 est une illustration schématique d'une licence utilisée dans le terminal de la figure 1,
- la figure 5 est une illustration de la structure d'un tableau contenu dans la licence de la figure 4,
- la figure 6 est une illustration d'une liste d'anti-rejeu contenue dans un processeur de sécurité du terminal de la figure 1,
- les figures 7A et 7B sont des organigrammes d'un procédé de gestion du nombre de visualisations du contenu audiovisuel mis en oeuvre dans le terminal de la figure 1,
- la figure 8 est une illustration schématique de la structure d'un EMM-U (Entitlement Management Message à adresse Unique) généré lors de l'exécution du procédé de la figure 7, et
- les figures 9 à 11 sont des organigrammes, respectivement, de trois algorithmes de calcul du nombre de visualisations déjà effectuées.

Dans ces figures, les mêmes références sont utilisées pour désigner les mêmes éléments.

Dans la suite de cette description, les caractéristiques et fonctions bien connues de l'homme du métier ne sont pas décrites en détail.

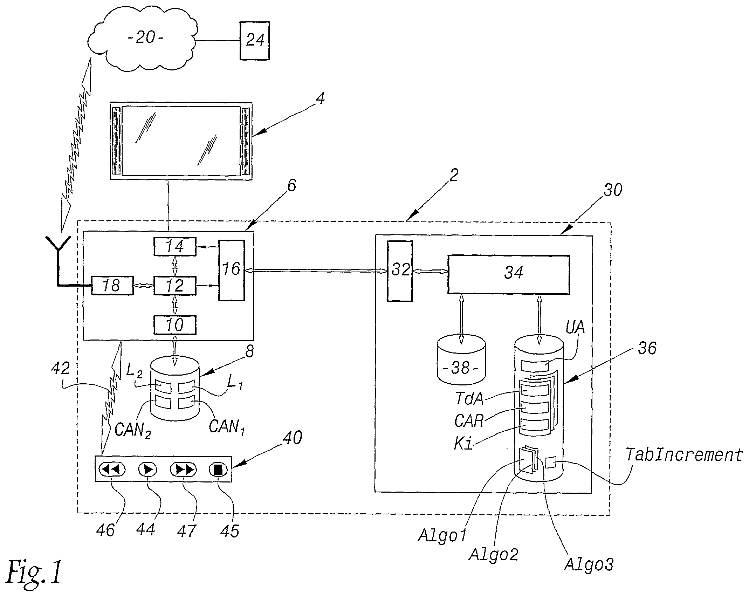

La figure 1 représente un terminal 2 de lecture de contenu audiovisuel numérique. Ce terminal 2 est apte à commander l'affichage sur un écran 4 des contenus audiovisuels lus de manière à ce que ceux-ci puissent être visualisés par un usager. Par usager, on désigne ici un être humain.

L'écran 4 est, par exemple, typiquement un écran de télévision.

Le terminal 2 comprend un décodeur 6 raccordé à un support 8 d'enregistrement d'informations. Les contenus audiovisuels sont enregistrés sur ce support 8. Par exemple, ici, à titre d'illustration, deux contenus audiovisuels CAN₁ et CAN₂ ainsi que leurs licences respectives L₁ et L₂ sont enregistrés dans le support 8. Les contenus CAN₁ et CAN₂ sont, par exemple, des contenus audiovisuels embrouillés à l'aide de mots de contrôle CW.

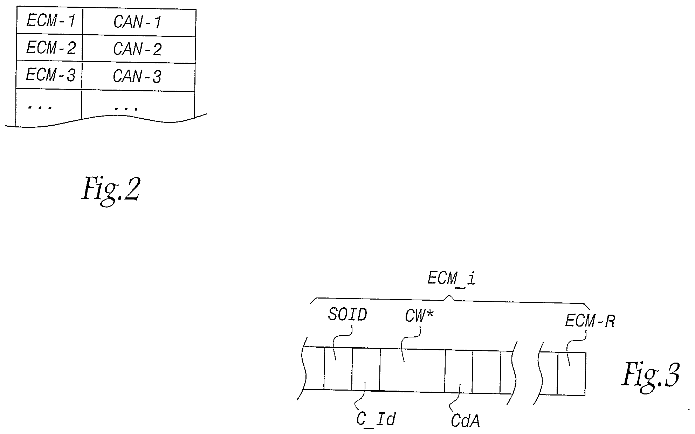

La structure d'un de ces contenus audiovisuels est illustrée sur la figure 2.

Le contenu audiovisuel est divisé en une multitude de segments temporels CAN_1 à CAN_N. Ces segments CAN_i se suivent dans un ordre prescrit. Par exemple, le segment CAN_1 correspond au premier segment qui doit être lu et le segment CAN_N correspond au dernier segment qui doit être lu. Ici, chaque segment CAN_i est embrouillé à l'aide d'un seul mot de contrôle CW différent de celui utilisé pour embrouiller les segments précédents et les segments suivants. Ainsi, dans ce mode de réalisation particulier, chaque segment correspond à une cryptopériode.

A titre d'exemple, la durée d'une cryptopériode est généralement de 10 secondes.

Chaque segment ou cryptopériode CAN_i est associé à un message ECM (Entitlement Control Message) noté ECM_i. Le message ECM_i contient un cryptogramme CW* du mot de contrôle CW utilisé pour embrouiller le segment CAN_i. Les messages ECM_i sont enregistrés sur le support 8 en même temps que les segments CAN_i.

La structure de ces messages ECM_i est par exemple conforme à la norme UTE C90-007 « Système d'accès conditionnel pour systèmes de diffusion numérique » utilisée dans le domaine de la transmission des signaux multimédias embrouillés par l'intermédiaire de réseaux grande distance de transmission d'informations tel que, par exemple, des réseaux faisant intervenir des satellites.

Sur la figure 3, seules les portions de la structure du message ECM_i utiles pour la compréhension de la suite de la description sont représentées. Le message ECM_i comprend un champ SOID contenant à la fois un identifiant de l'opérateur ayant diffusé ce contenu audiovisuel ainsi qu'un identifiant du contexte cryptographique à appliquer. L'identifiant du contexte cryptographique à appliquer permet notamment à un processeur de sécurité d'identifier quelle est la ou quelles sont les clés cryptographiques à utiliser pour traiter ce message ECM.

Le message ECM_i comprend également :
- un champ C_Id contenant un identifiant C_Id d'une cellule d'un tableau,
- un champ CW* contenant le cryptogramme CW* d'un mot de contrôle CW,
- un champ CdA contenant des conditions d'accès CdA au contenu audiovisuel, et
- un champ ECM_R contenant une redondance cryptographique telle qu'un MAC (Message Authentication Code) ou une signature cryptographique de l'ECM_i portant sur une partie des informations contenues dans chacun des champs précédents de ce message ECM_i.

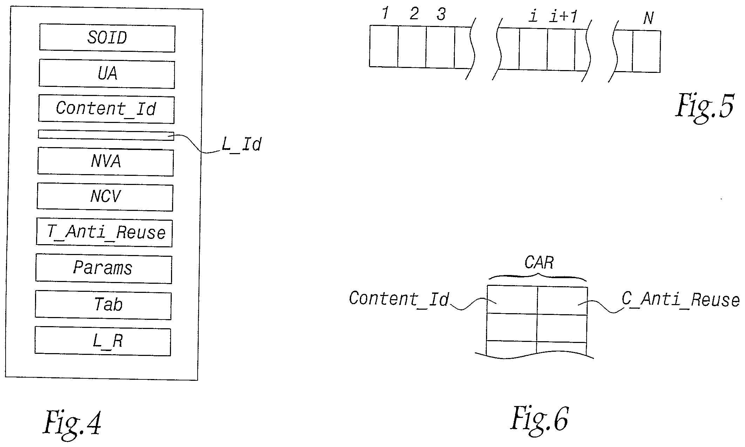

L'identifiant C_Id établit une relation biunivoque entre ce message ECM_i et une cellule du tableau de la figure 5.

La structure des licences L₁ et L₂ est, par exemple, conforme à la structure de licence représentée sur la figure 4. Plus précisément, chaque licence comprend les champs suivants :
- un champ SOID ayant le même contenu que le champ SOID des messages ECM_i associés au contenu audiovisuel correspondant à cette licence,
- un champ UA contenant un identifiant unique UA d'un processeur de sécurité,
- un champ Content_Id contenant un identifiant Content_Id du contenu audiovisuel auquel correspond cette licence,
- un champ L_Id contenant un identifiant L_Id de cette licence permettant notamment de distinguer cette licence d'une autre licence contenant exactement les mêmes identifiants SOID, UA et Content_Id,
- un champ NVA contenant un nombre entier positif NVA correspondant au nombre de visualisations autorisées pour le contenu audiovisuel identifié par l'identifiant Content_Id,
- un champ NCV contenant un nombre entier NCV utilisé pour mémoriser le nombre de segments déjà visualisés lors de la précédente lecture du contenu audiovisuel associé à cette licence,
- un champ T_Anti_Reuse contenant un identifiant T_Anti_Reuse de l'utilisation précédente de la licence, utilisé pour éviter qu'une même licence puisse être réutilisée plusieurs fois ; typiquement cet identifiant est un nombre dont la valeur croit strictement à chaque nouvelle utilisation de la licence,
- un champ Params contenant différents paramètres d'un algorithme de calcul du nombre de visualisations déjà effectuées,
- un champ Tab contenant le tableau de la figure 5, et
- un champ L_R contenant une redondance cryptographique L_R telle qu'un MAC ou une signature cryptographique portant sur au moins une partie des informations contenues dans chacun des champs précédents.

A titre d'exemple, le champ Params contient des valeurs pour les paramètres suivants :
- C_Size,
- S₁,
- S₂, et
- Algo_Id.

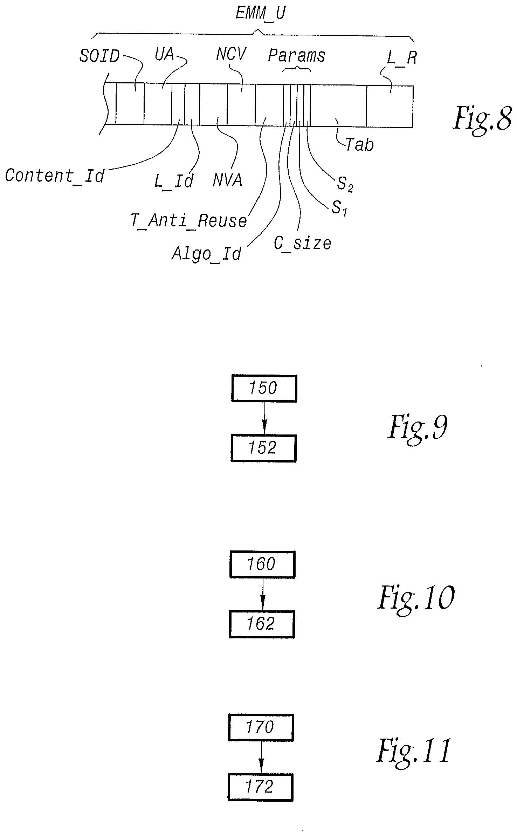

L'intérêt de ces paramètres apparaîtra en regard de la description des figures 9 à 11.

La redondance cryptographique L-R est construite en mettant en oeuvre un algorithme cryptographique et une clé cryptographique.

La figure 5 représente schématiquement un exemple de structure possible pour le tableau Tab. Ici, ce tableau est formé de N cellules successives classées dans l'ordre allant de 1 à N. N est un nombre entier égal au nombre de segments contenus dans le contenu audiovisuel auquel est associée la licence. Chaque cellule est destinée à contenir un nombre codé sur un nombre de bits paramétrables à l'aide du paramètre C_Size contenu dans le champ Params de la licence.

Les valeurs 1, 2, 3, ..., i, i+1, ...,N indiquées au-dessus de chacune de ces cellules représentent la valeur de l'identifiant C_Id permettant d'identifier la cellule située juste en-dessous.

Le décodeur 6 comprend :
- un lecteur électronique 10 apte à lire et à écrire des informations sur le support 8,
- un filtre 12 apte à orienter le contenu audiovisuel embrouillé vers un désembrouilleur et un décodeur 14 et à envoyer les messages ECM_i associés à ce contenu audiovisuel embrouillé vers une interface décodeur/carte 16,
- le désembrouilleur et décodeur 14.

Le décodeur 6 comprend ici, à titre d'illustration uniquement, un récepteur 18 apte à recevoir par l'intermédiaire d'un réseau sans fil 20 de transmission d'informations des contenus audiovisuels embrouillés et les messages ECM associés à ce contenu audiovisuel. Par exemple, les contenus audiovisuels embrouillés ainsi que les messages ECM sont diffusés par un émetteur distant 24 vers une multitude de terminaux distants, tel que le terminal 2.

Le terminal 2 comprend également un processeur de sécurité 30 raccordé au décodeur 6. Ce processeur de sécurité 30 est conçu pour traiter des messages ECM et EMM (Entitlement Management Message) et effectuer les opérations de chiffrement et de déchiffrement nécessaires au fonctionnement du terminal 2.

A cet effet, le processeur 30 comporte :
- une interface 32 apte à coopérer avec l'interface 16 du décodeur pour recevoir de ce dernier des messages ECM et EMM,
- un calculateur 34 apte à traiter les messages EMM et ECM reçus par l'intermédiaire de l'interface 32,
- une mémoire non volatile 36 dans laquelle sont stockées, en outre, les différentes informations nécessaires aux opérations de chiffrement/déchiffrement, et
- une mémoire volatile 38 dans laquelle sont stockés des résultats temporaires de traitement.

Par exemple, le processeur 30 est un processeur de sécurité amovible telle qu'une carte à puce.

La mémoire 36 contient :
- un identifiant UA unique du processeur de sécurité permettant de distinguer le processeur 30 de l'ensemble des processeurs de sécurité susceptibles d'être utilisés dans le décodeur 6,
- trois algorithmes Algo1, Algo2 et Algo3 différents permettant chacun de calculer le nombre de visualisations déjà effectuées.

Pour chaque identifiant de contexte cryptographique, la mémoire 36 contient aussi les informations suivantes :
- des titres d'accès TdA destinés à être comparés aux conditions d'accès CdA contenues dans un message ECM afin de déterminer si ce message ECM peut être ou non traité par le processeur 30,
- une liste CAR destinée à empêcher la réutilisation d'une licence,
- des clés cryptographiques Kᵢ permettant d'effectuer les opérations de chiffrement et de déchiffrement nécessaires au traitement des messages ECM et EMM.

La figure 6 représente un exemple de structure possible pour la liste CAR. Cette liste comporte, par exemple, une première colonne contenant les identifiants Content_Id et une seconde colonne comportant l'identifiant C_Anti_Reuse associé à l'identifiant Content_Id. La liste CAR contient autant de lignes que de licences déjà lues par le lecteur 10.

La mémoire 36 comprend également un tableau Tablncrément destiné à être utilisé en conjonction avec l'algorithme Algo3. Le tableau Tablncrément est, par exemple, le suivant :

| | | | | | | | | | |
|---|---|---|---|---|---|---|---|---|---|
| X | 0 | 1 | 2 | 3 | 4 | 5 | 6 | 7 | X+1 |
| Y | 0 | 1 | 0,5 | 0,3 | 0,2 | 0,2 | 0,2 | 0,2 | 0,1 |
| Z | 0 | 1 | 1,5 | 1,8 | 2 | 2,2 | 2,4 | 2,6 | Y+0,1 |

La première ligne X de ce tableau contient des entiers correspondants chacun à un nombre de fois où un segment a été visualisé. La seconde ligne Y associe à chacun de ces entiers un pas d'incrémentation. On remarquera que ce pas d'incrémentation est ici une fonction décroissante monotone du nombre de fois où un segment a déjà été lu. La ligne Z donne le nombre effectivement pris en compte par l'algorithme pour chaque nombre de visualisation d'un segment.

Enfin, le terminal 2 comporte une télécommande 40 permettant de commander par l'intermédiaire d'une liaison sans fil 42 le décodeur 6. Pour simplifier l'illustration, seules les touches suivantes de la télécommande 40 sont représentées :
- une touche 44 permettant de déclencher la lecture d'un contenu audiovisuel sélectionné parmi les différents contenus audiovisuels enregistrés sur le support 8,
- une touche 45 permettant d'arrêter la lecture d'un contenu audiovisuel afin, par exemple, de passer à la lecture d'un autre contenu audiovisuel ou tout simplement d'arrêter toute lecture,
- une touche 46 permettant de faire des sauts en arrière, c'est-à-dire de passer directement du segment actuellement lu à un segment précédent sans qu'il soit pour cela nécessaire de lire les segments intermédiaires entre le segment actuellement lu et le segment précédent, et
- une touche 47 permettant d'effectuer des sauts en avant, c'est-à-dire permettant de passer du segment actuellement lu directement à un segment suivant sans avoir à lire les segments intermédiaires situés entre le segment actuellement lu et le segment suivant.

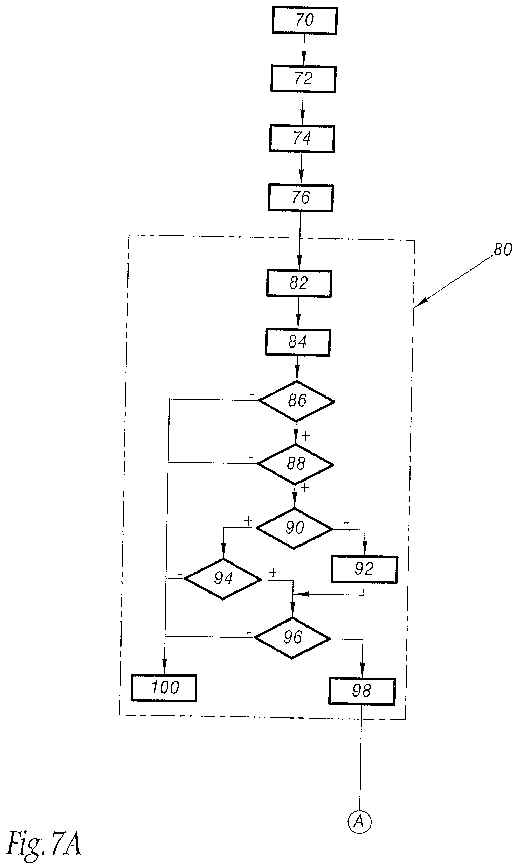

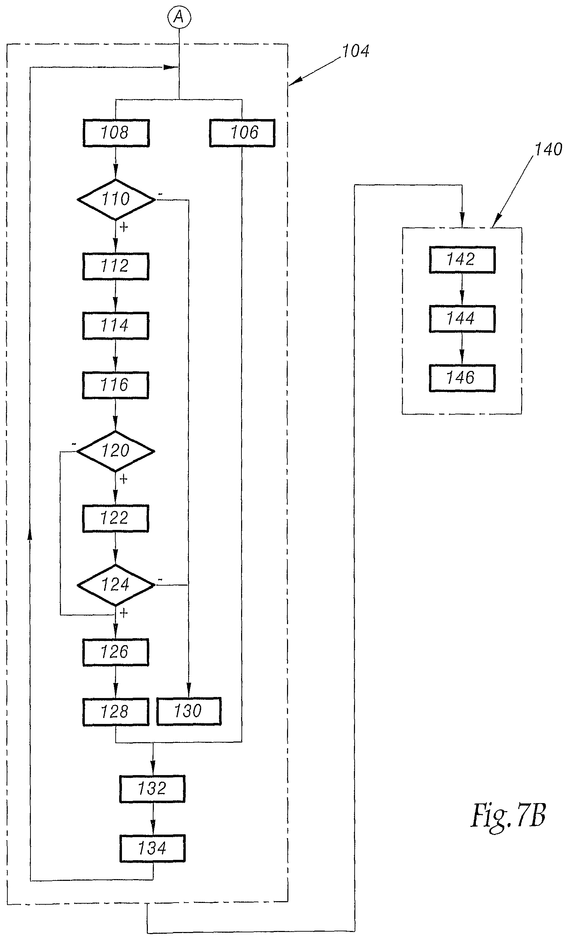

Le fonctionnement du terminal 2 va maintenant être décrit en regard du procédé de la figure 7. Initialement, lors d'une étape 70, l'émetteur 24 envoie au terminal 2 un contenu audiovisuel embrouillé et les messages ECM correspondants par l'intermédiaire du réseau 20. Lors d'une étape 72, le terminal 2 enregistre ce contenu audiovisuel embrouillé et les messages ECM correspondants sur le support 8 de manière à obtenir, par exemple, le contenu audiovisuel enregistré CAN₁.

Ensuite, lors d'une étape 74, l'émetteur 24 transmet par l'intermédiaire du réseau 20 ou par un autre mode de communication, la licence L₁ au terminal 2. Il s'agit ici de la version initiale de la licence L₁, contenant notamment la valeur initiale du nombre NVA de visualisations autorisées de ce contenu. De préférence, cette valeur initiale permet au moins deux visualisations complètes du contenu. Par exemple, lors de l'étape 74, cette licence est transmise dans un message EMM-U dont la structure est représentée sur la figure 8. Plus précisément, la structure de ce message EMM-U est conforme à la norme UTE C90-007 (déjà citée) du domaine de la transmission de signaux multimédias embrouillés. Sur la figure 8, seuls les éléments nécessaires à la compréhension de la suite de la description sont représentés.

Plus précisément, le message EMM_U comprend les mêmes champs que ceux déjà décrits en regard de la figure 4, de sorte que leur description ne sera pas reprise ici en détail.

Lors d'une étape 76, seul le terminal 2 dont le processeur de sécurité correspond à l'identifiant UA contenu dans le message EMM-U enregistre la licence reçue sur le support 8.

On comprend que la licence peut être envoyée avant ou en même temps que le contenu, de même pour son enregistrement sur le support 8. Les étapes 70 et 74 peuvent ainsi être simultanées ou permutées, ainsi que les étapes 72 et 76, sous réserve que les étapes 72 et 76 restent postérieures respectivement aux étapes 70 et 74.

Plus tard, l'utilisateur du terminal 2 déclenche la lecture d'un des contenus audiovisuels enregistrés sur le support 8 à l'aide de la télécommande 40, par exemple. On suppose ici que la lecture du contenu CAN₁ est déclenchée. Une phase 80, dite d'ouverture de session, débute alors.

Initialement, lors d'une étape 82, si plusieurs licences existent pour le même contenu audiovisuel, l'usager sélectionne la licence à utiliser pour visualiser ce contenu. Ici, la licence L₁ est automatiquement sélectionnée puisque seule cette licence est associée au contenu CAN₁.

Ensuite, lors d'une étape 84, le terminal envoie la licence sélectionnée au processeur 30 par l'intermédiaire des interfaces 16 et 32. A cet effet, le décodeur transmet le message EMM-U représentant la licence L₁, ce message EMM-U étant identique à celui de la figure 8.

Lors d'une étape 86, le processeur 30 vérifie que l'identifiant UA contenu dans le message EMM-U reçu correspond à l'identifiant UA enregistré dans la mémoire 36. Par exemple, lors de l'étape 86, le processeur 30 vérifie si ces identifiants UA sont identiques.

Dans l'affirmative, il procède à une étape 88 lors de laquelle le processeur 30 vérifie l'authenticité de la licence reçue à l'aide de la redondance cryptographique L_R. Plus précisément, lors de l'étape 88, le processeur 30 procède à partir du contenu des champs de la licence reçue aux opérations similaires à celles précédemment effectuées pour obtenir la redondance L_R. En particulier, lors de l'étape 88, au moins une des opérations implique un chiffrement ou un déchiffrement avec une clé cryptographique. Par exemple, la clé cryptographique utilisée dans la redondance cryptographique est identifiée grâce à l'identifiant de contexte contenu dans le champ SOID du message EMM-U. Si le traitement de la redondance cryptographique par le processeur 30 conduit à un résultat positif, par exemple si la redondance construite par le processeur 30 est identique à la redondance contenue dans le champ L_R, alors la licence est considérée comme authentique et intègre et le processeur procède à une étape 90.

Lors de l'étape 90, le processeur 30 recherche l'identifiant C_Anti_Reuse associé à l'identifiant Content_Id contenu dans la licence reçue. Si aucun identifiant de la liste CAR correspond à l'identifiant Content_Id reçu, alors le processeur 30 ajoute, lors d'une étape 92, l'identifiant Content_Id reçu à la liste CAR et associe cet identifiant à un identifiant C_Anti_Reuse de valeur initialisée à zéro.

Dans le cas contraire, lors d'une étape 94, le processeur 30 compare la valeur de l'identifiant T_Anti_Reuse de la licence reçue à la valeur de l'identifiant C_Anti_Reuse associé à l'identifiant Content_Id dans la liste CAR. Si les identifiants correspondent, par exemple si les valeurs sont identiques, alors le processeur 30, lors d'une étape 96, vérifie que le nombre NVA contenu dans la licence reçue est strictement supérieur à zéro. Dans l'affirmative, lors d'une étape 98, le processeur 30 enregistre dans sa mémoire 38 les paramètres contenus dans le champ Params, les nombres NVA, NCV et le tableau Tab contenus dans la licence reçue.

Si l'une des vérifications effectuées lors des étapes 86, 88, 94 ou 96 échoue, le processeur 30 procède à une étape 100 d'arrêt du traitement de la licence reçue et d'arrêt du déchiffrement du contenu audiovisuel embrouillé.

A l'issue de l'étape 98, la phase 80 s'achève et une phase 104 de lecture du contenu audiovisuel débute automatiquement.

Au début de la phase 104, lors d'une étape 106, le premier segment CAN_1 du contenu audiovisuel CAN₁ est lu et transmis au désembrouilleur 14. En parallèle, lors d'une étape 108, le message ECM_1 associé est transmis au processeur 30.

Ensuite, lors d'une étape 110, les conditions d'accès CdA contenues dans le message ECM_1 sont comparées aux titres d'accès TdA contenus dans la mémoire 36. Dans le cas où les conditions d'accès correspondent aux titres d'accès TdA, alors le procédé se poursuit par une étape 112 d'extraction de l'identifiant C_Id contenu dans le message ECM_1 reçu.

Ensuite, lors d'une étape 114, le processeur 30 incrémente d'un pas spécifié la cellule du tableau Tab reçu correspondant à l'identifiant C_Id extrait. Le pas spécifié dépend ici du paramètre Algo_Id. L'étape 114 est exécutée uniquement si la taille maximale de la cellule spécifiée par l'identifiant C_Id n'a pas déjà été atteinte.

Lors d'une étape 116, le processeur 30 incrémente également du pas spécifié le nombre NCV.

Ensuite, lors d'une étape 120, le processeur détermine si une nouvelle visualisation du contenu audiovisuel a été effectuée. Cette détermination est effectuée en exécutant l'algorithme correspondant à l'identifiant Algo_Id. Des algorithmes correspondants respectivement aux identifiants Algo1, Algo2 et Algo3 sont décrits, respectivement, en regard des figures 9 à 11.

Dans l'affirmative, il procède à une étape 122, lors de laquelle le nombre NVA est incrémenté et, si nécessaire, le tableau Tab et le nombre NVC sont mis à jour.

Lors d'une étape 124, le processeur 30 vérifie que le nombre NVA est strictement supérieur à zéro. Si le nombre NVA est toujours strictement supérieur à zéro, alors lors d'une étape 126, le processeur procède à l'extraction du cryptogramme CW* contenu dans le message ECM_1 reçu puis déchiffre ce cryptogramme avec une clé de déchiffrement enregistrée dans le contexte associé au contenu du champ SOID. Ensuite, lors d'une étape 128, le mot de contrôle CW déchiffré est transmis au désembrouilleur 14.

Si lors de l'étape 110, les conditions d'accès reçues ne correspondent pas aux titres d'accès enregistrés, ou si lors de l'étape 124, le nombre NVA est inférieur ou égal à zéro, alors le processeur 30 procède immédiatement à une étape 130 d'arrêt du traitement des messages ECM_i reçus. Par conséquent, aucun nouveau mot de contrôle CW n'est fourni au désembrouilleur ce qui empêche le désembrouillage correct du contenu audiovisuel enregistré sur le support 8.

Si lors de l'étape 120, il a été déterminé qu'aucune nouvelle visualisation n'a été effectuée, alors le procédé passe de l'étape 120 directement à l'étape 126.

A l'issue de l'étape 128, lors d'une étape 132, le désembrouilleur 14 désembrouille le segment CAN_1 en utilisant le mot de contrôle CW reçu du processeur 30. Ensuite, lors d'une étape 134, le segment désembrouillé est affiché en clair sur l'écran 4.

A l'issue de l'étape 134, le procédé retourne automatiquement aux étapes 106 et 108 pour lire le segment suivant du contenu audiovisuel CAN₁.

En l'absence d'utilisation de sauts en avant ou en arrière déclenchés à l'aide des touches 46 et 47, les étapes 106 à 134 sont réitérées pour chacun des segments CAN_i du contenu CAN₁ dans l'ordre de ces segments.

Lors de la phase 104, l'usager peut également utiliser les touches 46 et 47 pour provoquer des sauts en arrière ou en avant. Dans ces conditions, les segments du contenu CAN₁ ne sont plus lus dans l'ordre prescrit. Toutefois, les étapes 106 à 134 continuent de s'appliquer à chacun des segments lus. En d'autres termes, l'usage des touches 46 et 47 ne met pas fin à la session de lecture en cours.

Après avoir visualisé le contenu audiovisuel, l'usager peut décider de mettre fin à cette visualisation, par exemple, en enfonçant la touche 45. A ce moment, le processeur 30 procède à une phase 140 de clôture de la session en cours. Au début de la phase 140, lors d'une étape 142, le processeur 30 incrémente le nombre constituant l'identifiant C_Anti_Reuse associé à l'identifiant Content_Id dans la liste CAR. Ensuite, lors d'une étape 144, le processeur génère une licence réactualisée, c'est-à-dire que la licence réactualisée contient les nouvelles valeurs des nombres NVA, NCV, T_Anti_Reuse, et Tab, ainsi qu'une valeur L_R reconstituée.

La valeur de l'identifiant T_Anti_Reuse de la licence réactualisée est identique à celle de l'identifiant C_Anti_Reuse associé à l'identifiant Content_Id dans la liste CAR.

La redondance L_R est construite à partir des nouvelles valeurs de la licence et en utilisant la clé cryptographique adéquate enregistrée dans le contexte associé à l'identifiant SOID.

Ensuite, lors d'une étape 146, le processeur 30 transmet la licence L₁ réactualisée au décodeur 6 qui l'enregistre à la place de la licence L₁ précédemment enregistrée sur le support 8.

On décrit maintenant trois exemples d'algorithmes de calcul du nombre de visualisations tels qu'ils peuvent être mis en oeuvre à l'étape 120. Chaque algorithme est désigné par une valeur particulière du paramètre Algo_Id contenu dans la licence
La figure 9 illustre l'algorithme Algo1 de calcul du nombre de visualisations déjà effectuées. L'algorithme Algo1 utilise deux paramètres contenus dans la licence, à savoir le seuil S₁ et le paramètre C_Size. Pour l'exécution de l'algorithme Algo1, le paramètre C_Size est fixé à un bit.

Lors de l'exécution de l'algorithme Algo1, lors d'une étape 150, le processeur 30 détecte une discontinuité dans la lecture du contenu audiovisuel. Par exemple, cette discontinuité peut être détectée en réponse à l'enfoncement d'une des touches 46 ou 47. La discontinuité peut être également détectée en observant une discontinuité dans les valeurs des identifiants C_Id contenus dans les ECM_i reçus.

Ensuite, lorsque cette discontinuité a été détectée, lors d'une étape 152, le processeur 30 considère qu'une nouvelle visualisation du contenu audiovisuel a été effectuée si le nombre de cellules du tableau Tab contenant un « 1 » est supérieur ou égal au seuil S₁. Dans l'affirmative, lors de l'étape 122, le nombre NVA est décrémenté de un et toutes les cellules du tableau Tab sont réinitialisées à la valeur zéro.

L'étape 152 est également exécutée automatiquement lorsque la fin du dernier segment du contenu audiovisuel est atteinte.

L'algorithme Algo1 permet la visualisation répétée d'une partie restreinte par le seuil S₁ du contenu mais limite le nombre de visualisations dès lors que la partie du contenu visualisée est plus importante.

La figure 10 illustre l'algorithme Algo2 de calcul du nombre de visualisations déjà effectuées. Cet algorithme Algo2 utilise les paramètres C_Size, S₁ et S₂ contenus dans la licence. Ici, le paramètre C_Size est égal à un bit.

Lors d'une étape 160, par exemple identique à l'étape 150, une discontinuité dans la lecture du contenu audiovisuel est détectée. En réponse, lors d'une étape 162, il est déterminé qu'une nouvelle visualisation a été effectuée si le nombre de cellules du tableau Tab contenant un « 1 » est supérieur au seuil S₁ ou si le nombre NCV est supérieur ou égal au seuil S₂.

Dans le cas où il est déterminé qu'une nouvelle visualisation a été effectuée ou à la fin de la lecture du dernier segment, lors de l'étape 122, le nombre NVA est décrémenté de un et toutes les cellules du tableau Tab ainsi que la valeur du nombre NCV sont réinitialisées à la valeur zéro.

L'algorithme Algo2 se différencie de Algo1 en ce qu'il limite la visualisation d'une partie restreinte du contenu, par action du seuil S₂.

La figure 11 illustre l'algorithme Algo3. L'algorithme Algo3 utilise les paramètres C_Size et S₂ de la licence reçue. De plus, l'identifiant de l'algorithme Algo3 indique au processeur 30 que le pas d'incrément utilisé lors de l'étape 116 est déterminé à partir du tableau TabIncrément.

Ensuite, lors d'une étape 170, le processeur 30 détecte une discontinuité dans la lecture du contenu audiovisuel. En réponse ou à la fin de la lecture du dernier segment, lors d'une étape 172, il est déterminé qu'une nouvelle visualisation a été effectuée si le nombre NCV est supérieur au seuil S₂. Dans l'affirmative, lors de l'étape 122, le nombre NVA est décrémenté de un et le nombre NCV ainsi que toutes les cellules du tableau Tab sont réinitialisés à zéro. On remarquera que dans ce dernier mode de réalisation, le nombre NCV est incrémenté de un lorsqu'un segment est visualisé pour la première fois. Par contre, lorsque ce même segment est visualisé une seconde fois, le nombre NCV n'est incrémenté que de 0,5. Puis, si ce segment est encore visualisé d'autres fois, l'incrément utilisé lors de l'étape 116 est encore plus petit. Ainsi, par ce biais, on affecte une importance moins grande aux visualisations ultérieures d'un même segment qu'à la première visualisation.

De nombreux autres modes de réalisation sont possibles. Par exemple, la licence peut être transmise de l'émetteur au décodeur, puis du décodeur au processeur de sécurité en utilisant un autre message qu'un message EMM-U. Par exemple, toute structure signée de données peut être utilisée.

Le processeur de sécurité 30 a été ici décrit comme étant un processeur amovible. En variante, le processeur 30 est intégré au décodeur 6 et fixé de façon permanente à ce dernier.

En variante, la licence ne contient pas de champ L_R et n'est donc pas protégée par une signature.

Dans le cas où il n'existerait qu'une seule licence par contenu audiovisuel, le champ L_Id peut être omis.

Dans le cas où il existe plusieurs licences possibles pour un même contenu audiovisuel, la sélection de la licence à utiliser peut être automatique. Par exemple, la licence la plus vieille peut être utilisée en priorité.

Ici, chaque segment correspond à une cryptopériode. En variante, un segment correspond à plusieurs cryptopériodes successives. Dans ce cas, plusieurs messages ECM_i comporteront le même identifiant C_Id.

Dans un autre mode de réalisation, les cellules du tableau Tab peuvent être décrémentées au lieu d'être incrémentées.

Dans des modes de réalisation où le tableau Tab ne serait jamais réinitialisé, le champ NCV peut être omis.

La licence peut également être commune à plusieurs contenus audiovisuels enregistrés sur le support 8. Dans ce cas, l'identifiant Content_Id identifie non pas un seul contenu audiovisuel, mais un groupe de contenus audiovisuels susceptibles d'être visualisés à l'aide du terminal 2.

Certaines étapes du procédé de la figure 4 peuvent être permutées. Par exemple, l'étape 110 peut être effectuée après l'étape 124.

Ici, le contrôle du nombre de visualisations déjà effectuées est réalisé après la lecture de chaque segment. En variante, ce contrôle peut être réalisé uniquement à la fin de la session de lecture. Ainsi, dans ce mode de réalisation, rien n'empêche un usager de visualiser autant de fois qu'il le souhaite un contenu audiovisuel au cours d'une seule et même session. Par contre, le nombre de sessions sera limité.

Dans une autre variante, le pas d'incrémentation utilisé par l'algorithme peut être fourni par un paramètre du message ECM pour tenir compte de l'intérêt variable d'une partie ou l'autre du contenu.

Le support 8 peut être un support amovible tel que, par exemple, un DVD-RW (Digital Video Disc-Rewritable) ou un CD-RW (Compact Disc-Rewritable). Il peut être un support amovible non ré-inscriptble (DVD-R, CD-R), dans ce cas la licence est stockée dans une mémoire non volatile du lecteur électronique.

Ce qui a été décrit ici dans le cas de contenus audiovisuels peut également s'appliquer à des contenus audiophoniques sans vidéo.

Ce qui a été décrit ici dans le cas d'affichage d'un contenu audiovisuel peut également s'appliquer à la redistribution contrôlée d'un tel contenu dans un réseau local ou domestique.

## Revendications

1. Procédé de gestion du nombre de visualisations d'un contenu audiovisuel, ce procédé comportant :
- la fourniture (72) d'un contenu audiovisuel numérique enregistré sur un support d'enregistrement d'informations, ce contenu étant divisé en plusieurs segments temporels consécutifs et destinés à être lus automatiquement dans un ordre prescrit,
- la fourniture (74) d'un nombre de visualisations autorisées de ce contenu audiovisuel,
- la lecture (106) du contenu audiovisuel enregistré, à l'aide d'un lecteur électronique, le lecteur électronique permettant notamment des sauts en arrière pour lire un segment précédent avant que la fin du contenu audiovisuel ne soit atteinte, - le calcul (120, 122) du nombre de visualisations du contenu audiovisuel déjà effectuées, et
- l'interdiction (130) de toute nouvelle visualisation du contenu audiovisuel si le nombre de visualisations déjà effectuées est supérieur ou égal au nombre de visualisations autorisées et, dans le cas contraire, l'autorisation d'une nouvelle visualisation du contenu audiovisuel,
**caractérisé en ce que** le procédé comporte :
- la fourniture (84) d'un tableau contenant autant de cellules que de segments temporels, chaque cellule étant associée de façon biunivoque à un segment respectif du contenu audiovisuel, chaque cellule étant apte à contenir un nombre,
- lorsqu'un segment du contenu audiovisuel est lu par le lecteur électronique, l'incrémentation (114) ou la décrémentation d'un pas prédéterminé du nombre contenu dans la cellule associée à ce segment, le pas prédéterminé étant donné par un algorithme de calcul du nombre de visualisations effectuées ou fourni par un paramètre d'un message reçu et
- le calcul (120 ; 152 ; 162 ; 172) du nombre de visualisations déjà effectuées réalisé par ledit algorithme de calcul à partir des nombres enregistrés dans chacune des cellules du tableau, comportant :
- la détermination (152 ; 162) du nombre de cellules du tableau contenant un nombre qui a été incrémenté ou décrémenté depuis la dernière visualisation du contenu audiovisuel, et
- le calcul (122) du nombre de visualisations déjà effectuées en fonction du résultat de cette détermination.

2. Procédé selon la revendication 1, dans lequel le procédé comporte :
- l'enregistrement (76) dans une mémoire non volatile d'une licence de visualisation multiple, cette licence comportant au moins :
• le nombre de visualisations autorisées,
• le tableau contenant les cellules associées de façon biunivoque aux segments temporels du contenu audiovisuel,
• une redondance cryptographique réalisée à l'aide d'une clé cryptographique et d'au moins une partie de chacune des informations précédentes,
- la vérification (88) de la redondance cryptographiquee avant chaque nouvelle utilisation du lecteur pour visualiser le contenu audiovisuel, et
- l'interdiction (100) de toute nouvelle visualisation dans le cas où la redondance cryptographique n'a pas pu être vérifiée correctement.

3. Procédé selon la revendication 2, dans lequel :
- la licence comporte un identifiant T_Anti_Reuse de son utilisation précédente,
- un processeur (30) de sécurité équipé de moyens de stockage d'informations contenant :
• une clé cryptographique utilisable pour vérifier la redondance cryptographique de la licence et/ou une clé cryptographique permettant de réaliser la redondance cryptographique de la licence, et
• un identifiant C_Anti_Reuse de l'utilisation précédente de la licence,
- après chaque utilisation du lecteur pour visualiser le contenu audiovisuel, les identifiants T_Anti_Reuse et C_Anti_Reuse sont modifiés (142, 144) pour que leurs nouvelles valeurs respectives correspondent, et
- avant chaque nouvelle utilisation du lecteur pour visualiser le contenu audiovisuel, la visualisation du contenu audiovisuel est autorisée (94) uniquement si la valeur de l'identifiant T_Anti_Reuse correspond à la valeur de l'identifiant C_Anti_Reuse.

4. Procédé selon l'une des revendications 2 ou 3, dans lequel le procédé comporte la sélection (120) d'un algorithme de calcul du nombre de visualisations effectuées à exécuter lors du calcul du nombre de visualisations, en fonction du contenu de la licence, parmi un ensemble de plusieurs algorithmes de calcul différents susceptibles d'être exécutés, deux algorithmes de calcul étant considérés comme différents s'il existe un même contenu des cellules du tableau à partir duquel les deux algorithmes donnent des résultats différents.

5. Procédé selon l'une quelconque des revendications 2 à 4, dans lequel le procédé comporte :
- la fourniture de plusieurs contenus audiovisuels différents et de plusieurs licences ayant chacune un identifiant de contenu audiovisuel qui la relie de façon biunivoque à un seul des contenus audiovisuels, et
- lors du calcul du nombre de visualisations déjà effectuées, seules les informations contenues dans la licence contenant l'identifiant du contenu audiovisuel actuellement lu est utilisée pour le calcul du nombre de visualisations déjà effectuées.

6. Procédé selon l'une quelconque des revendications 2 à 5, dans lequel le procédé comporte :
- la fourniture d'un processeur de sécurité apte à traiter des messages ECM (Entitlement Control Message) et EMM (Entitlement Management Message),
- la transmission (84) de la licence sous la forme d'un message EMM au processeur de sécurité, ce message EMM contenant un identifiant de l'unique processeur de sécurité auquel il est adressé.

7. Procédé selon l'une quelconque des revendications précédentes, dans lequel différents segments du contenu audiovisuel sont embrouillés avec différents mots de contrôle, le procédé comportant pour chaque segment :
- la transmission (108) d'au moins un message ECM à un processeur de sécurité, chaque message ECM contenant : un cryptogramme du mot de contrôle nécessaire pour désembrouiller au moins une partie de ce segment du contenu audiovisuel, et un identifiant (CJd) de la cellule du tableau qui doit être incrémentée ou décrémentée quand ce message ECM est utilisé pour obtenir le mot de contrôle nécessaire au désembrouillage de ce segment du contenu audiovisuel,
- l'incrémentation (114) ou décrémentation du nombre contenu dans la cellule correspondante à l'identifiant de cellule contenue dans le message ECM,
- le déchiffrement (126), par le processeur de sécurité, du mot de contrôle contenu dans le message ECM transmis, et
- la transmission (128) du mot de contrôle déchiffré à un désembrouilleur pour désembrouiller au moins une partie du segment du contenu audiovisuel.

8. Procédé selon l'une quelconque des revendications précédentes, dans lequel, lors du calcul du nombre de visualisations déjà effectuées, le pas prédéterminé utilisé pour incrémenter (114) ou décrémenter le nombre contenu dans la cellule associée à un segment décroît ou croît en fonction du nombre de fois où ce segment a déjà été visualisé.

9. Processeur de sécurité, **caractérisé en ce qu'**il comporte des instructions pour l'exécution d'un procédé conforme à l'une quelconque des revendications précédentes, lorsque ces instructions sont exécutées par un calculateur électronique (34).

10. Terminal de lecture d'un contenu audiovisuel comportant :
- un support (8) d'enregistrement d'informations contenant le contenu audiovisuel numérique enregistré, ce contenu étant divisé en plusieurs segments temporels consécutifs et destinés à être lus automatiquement dans un ordre prescrit,
- un nombre entier (NVA) de visualisations autorisées pour ce contenu audiovisuel,
- un lecteur électronique (10) de contenus audiovisuels permettant notamment des sauts en arrière pour lire un segment précédent avant que la fin du contenu audiovisuel ne soit atteinte,
- le terminal étant apte :
à calculer le nombre de visualisations de ce contenu audiovisuel déjà effectuées, et
à interdire toute nouvelle visualisation du contenu audiovisuel si le nombre de visualisations déjà effectuées est supérieur ou égal au nombre de visualisations autorisées et, dans le cas contraire, à autoriser une nouvelle visualisation du contenu audiovisuel,
**caractérisé en ce que** le terminal comprend un tableau (figure 5) contenant autant de cellules que de segments temporels, chaque cellule étant associée de façon biunivoque à un segment respectif du contenu audiovisuel, chaque cellule étant apte à contenir un nombre, et **en ce que** le terminal est apte :
- lorsqu'un segment du contenu multimédia est lu par le lecteur électronique, à incrémenter ou à décrémenter d'un pas prédéterminé le nombre contenu dans la cellule associée à ce segment, le pas prédéterminé étant donné par un algorithme de calcul du nombre de visualisations effectuées ou fourni par un paramètre d'un message reçu, et
- à calculer par ledit algorithme de calcul le nombre de visualisations déjà effectuées à partir des nombres enregistrés dans chacune des cellules de ce tableau,
le terminal étant apte à :
- déterminer (152 ; 162) le nombre de cellules du tableau contenant un nombre qui a été incrémenté ou décrémenté depuis la dernière visualisation du contenu audiovisuel, et
- calculer (122) le nombre de visualisations déjà effectuées en fonction du résultat de cette détermination.

## Patentansprüche

1. Verfahren zum Verwalten der Anzahl von Darstellungen eines audiovisuellen Inhalts, das Verfahren aufweisend:
- das Bereitstellen (72) eines digitalen audiovisuellen Inhalts, der auf einem Datenspeichermedium gespeichert ist, wobei der Inhalt in eine Mehrzahl von aufeinanderfolgenden zeitlichen Abschnitten unterteilt ist und dazu vorgesehen ist, in einer vorher festgelegten Reihenfolge automatisch gelesen zu werden,
- das Bereitstellen (74) einer Anzahl von freigegebenen Darstellungen des audiovisuellen Inhalts,
- das Lesen (106) des gespeicherten audiovisuellen Inhalts mittels eines elektronischen Lesegeräts, wobei das elektronische Lesegerät insbesondere Rückwärtssprünge zum Lesen eines vorangehenden Abschnittes, bevor das Ende des audiovisuellen Inhalts erreicht ist, erlaubt, - wobei die Berechnung (120, 122) der Anzahl von Darstellungen des audiovisuellen Inhalts bereits durchgeführt ist, und
- das Verbieten (130) von jeder neuen Darstellung des audiovisuellen Inhalts, wenn die Anzahl von bereits durchgeführten Darstellungen größer als oder gleich der Anzahl von freigegebenen Darstellungen ist, und, im gegensätzlichen Falle, das Freigeben einer neuen Darstellung des audiovisuellen Inhalts,
**dadurch gekennzeichnet, dass** das Verfahren aufweist:
- das Bereitstellen (84) einer Tabelle, die so viele Zellen wie zeitliche Abschnitte aufweist, wobei jede Zelle eineindeutig mit einem jeweiligen Abschnitt des audiovisuellen Inhalts assoziiert ist, wobei jede Zelle dazu eingerichtet ist, eine Zahl aufzuweisen,
- wenn ein Abschnitt des audiovisuellen Inhalts mittels des elektronischen Lesegeräts gelesen wird, das Hochsetzen (114) oder Verringern der Zahl, die in der Zelle, die mit diesem Abschnitt assoziiert ist, enthalten ist, um einen vorher festgelegten Schritt, wobei der vorher festgelegte Schritt mittels eines Berechnungsalgorithmus der Anzahl von durchgeführten Darstellungen gegeben wird oder mittels eines Parameters einer empfangenen Nachricht bereitgestellt wird, und
- das Berechnen (120; 152; 162; 172) der Anzahl von bereits durchgeführten Darstellungen, das, ausgehend von den in jeder der Zellen der Tabelle gespeicherten Zahlen, mittels des genannten Berechnungsalgorithmus durchgeführt wird, aufweisend:
- das Ermitteln (152; 162) der Anzahl von Zellen der Tabelle, die eine Zahl aufweisen, die seit der letzten Darstellung des audiovisuellen Inhalts hochgesetzt oder verringert worden ist, und
- das Berechnen (122) der Anzahl von bereits durchgeführten Darstellungen in Abhängigkeit von dem Ergebnis der Ermittlung.

2. Verfahren gemäß Anspruch 1, wobei das Verfahren aufweist:
- das Abspeichern (76), in einem nicht-flüchtigen Speicher, einer Lizenz der Mehrfachdarstellung, wobei die Lizenz zumindest aufweist:
• die Anzahl von freigegebenen Darstellungen,
• die Tabelle, die die Zellen, die eineindeutig mit den zeitlichen Abschnitten des audiovisuellen Inhalts assoziiert sind, aufweist,
• eine kryptographische Redundanz, die mittels der Hilfe eines kryptographischen Schlüssels und mindestens eines Teilbereichs von jeder der vorangegangenen Informationen erzeugt wird,
- das Verifizieren (88) der kryptographischen Redundanz vor jeder neuen Verwendung des Lesegeräts zum Darstellen des audiovisuellen Inhalts, und
- das Verbieten (100) von jeder neuen Darstellung in dem Falle, dass die kryptographische Redundanz nicht korrekt verifiziert werden konnte.

3. Verfahren gemäß Anspruch 2, wobei:
- die Lizenz eine Kennzeichnung T_Anti_Reuse seiner vorangegangenen Benutzung aufweist,
- ein Sicherheitsprozessor (30), der mit Mitteln zum Abspeichern von Informationen ausgestattet ist, aufweisend:
• einen kryptographischen Schlüssel, der dazu verwendet werden kann, die kryptographische Redundanz der Lizenz zu verifizieren und/oder einen kryptographischen Schlüssel, der es erlaubt, die kryptographische Redundanz der Lizenz zu erzeugen, und
• eine Kennzeichnung C_Anti_Reuse der vorangegangenen Benutzung der Lizenz,
- nach jeder Benutzung des Lesegerätes zum Darstellen des audiovisuellen Inhalts die Kennzeichnungen T_Anti_Reuse und C_Anti_Reuse modifiziert werden (142, 144), so dass ihre neuen Werte jeweils übereinstimmen, und
- vor jeder neuen Benutzung des Lesegerätes zum Darstellen des audiovisuellen Inhalts die Darstellung des audiovisuellen Inhalts nur freigegeben wird (94), wenn der Wert der Kennzeichnung T_Anti_Reuse mit dem Wert der Kennzeichnung C_Anti_Reuse übereinstimmt.

4. Verfahren gemäß Anspruch 2 oder 3, wobei das Verfahren das Auswählen (120) eines Berechnungsalgorithmus der Anzahl von durchgeführten Darstellungen, der bei der Berechnung der Anzahl von Darstellungen durchgeführt werden soll, in Abhängigkeit von dem Inhalt der Lizenz aus einer Gruppe von mehreren verschiedenen Berechnungsalgorithmen, die dazu geeignet sind, ausgeführt zu werden, aufweist, wobei zwei Berechnungsalgorithmen als unterschiedlich betrachtet werden, wenn ein gleicher Inhalt der Zellen der Tabelle vorhanden ist, ausgehend von denen die beiden Algorithmen verschiedene Ergebnisse liefern.

5. Verfahren gemäß einem der Ansprüche 2 bis 4, wobei das Verfahren aufweist:
- das Bereitstellen einer Mehrzahl von unterschiedlichen audiovisuellen Inhalten und einer Mehrzahl von Lizenzen, die jede eine Kennzeichnung des audiovisuellen Inhalts, die sie eineindeutig mit einem einzelnen audiovisuellen Inhalt verbindet, aufweisen, und
- bei der Berechnung der Anzahl von bereits durchgeführten Darstellungen, das Verwenden von nur den in der Lizenz, die die Kennzeichnung des aktuell gelesenen audiovisuellen Inhalts aufweist, enthaltenen Informationen zur Berechnung der Anzahl von bereits durchgeführten Darstellungen.

6. Verfahren gemäß einem der Ansprüche 2 bis 5, wobei das Verfahren aufweist:
- das Bereitstellen eines Sicherheitsprozessors, der dazu geeignet ist, ECM (Entitlement Control Message)-Nachrichten und EMM (Entitlement Management Message)-Nachrichten zu verarbeiten,
- das Übertragen (84) der Lizenz in Form einer EMM-Nachricht an den Sicherheitsprozessor, wobei die EMM-Nachricht eine Kennzeichnung des einzelnen Sicherheitsprozessors, an den sie adressiert ist, aufweist.

7. Verfahren gemäß einem der vorangehenden Ansprüche, wobei unterschiedliche Abschnitte des audiovisuellen Inhalts mit unterschiedlichen Kontrollwörtern vermischt sind, wobei das Verfahren für jeden Abschnitt aufweist:
- das Übertragen (108) von mindestens einer ECM-Nachricht an einen Sicherheitsprozessor, wobei jede ECM-Nachricht aufweist: ein Kryptogramm des Kontrollwortes, das zum Entwirren von mindestens einem Teil des Abschnitts des audiovisuellen Inhalts notwendig ist, und eine Kennzeichnung (CJd) der Zelle der Tabelle, die hochgesetzt oder verringert werden soll, wenn die ECM-Nachricht dazu verwendet wird, das Kontrollwort, das zum Entwirren des Abschnittes des audiovisuellen Inhalts notwendig ist, zu erhalten,
- das Hochsetzen (114) oder Verringern der in der Zelle, die der in der ECM-Nachricht enthaltenen Kennzeichnung der Zelle entspricht, enthaltenen Zahl,
- das Entschlüsseln (126) des Kontrollwortes, das in der übertragenen ECM-Nachricht enthalten ist, mittels des Sicherheitsprozessors, und
- das Übertragen (128) des entschlüsselten Kontrollwortes an einen Entwirrer zum Entwirren mindestens eines Teils des Abschnitts des audiovisuellen Inhalts.

8. Das Verfahren gemäß einem der vorangehenden Ansprüche, wobei bei der Berechnung der Anzahl von bereits durchgeführten Darstellungen der vorher festgelegte Schritt, der zum Hochsetzen (114) oder Verringern der Zahl, die in der Zelle, die mit einem Abschnitt assoziiert ist, enthalten ist, verwendet wird, in Abhängigkeit von der Anzahl von Malen, in denen der Abschnitt bereits dargestellt wurde, abnimmt oder zunimmt.

9. Sicherheitsprozessor, **dadurch gekennzeichnet, dass** er Anweisungen zum Ausführen eines Verfahrens gemäß einem der vorangehenden Ansprüche aufweist, wobei die Anweisungen auf einem elektronischen Rechner (34) ausgeführt werden.

10. Endgerät zum Lesen eines audiovisuellen Inhalts, aufweisend:
- ein Medium (8) zum Aufzeichnen von Informationen, die den gespeicherten digitalen audiovisuellen Inhalt aufweisen, wobei der Inhalt in eine Mehrzahl von aufeinanderfolgenden zeitlichen Abschnitten unterteilt ist und dazu vorgesehen ist, in einer vorher festgelegten Reihenfolge automatisch gelesen zu werden,
- eine ganze Zahl (NVA) von Darstellungen, die für den audiovisuellen Inhalt freigegeben sind,
- ein elektronisches Lesegerät (10) für audiovisuelle Inhalte, das insbesondere Rückwärtssprünge zum Lesen eines vorangehenden Abschnitts, bevor das Ende des audiovisuellen Inhalts erreicht ist, erlaubt,
- wobei das Endgerät dazu eingerichtet ist:
die Anzahl von bereits durchgeführten Darstellungen des audiovisuellen Inhalts zu berechnen, und
jede neue Darstellung des audiovisuellen Inhalts zu verbieten, wenn die Anzahl von bereits durchgeführten Darstellungen größer als oder gleich der Anzahl von freigegebenen Darstellungen ist, und, im gegensätzlichen Falle, eine neue Darstellung des audiovisuellen Inhalts freizugeben,
**dadurch gekennzeichnet, dass** das Endgerät eine Tabelle (Figur 5) aufweist, die so viele Zellen wie zeitliche Abschnitte aufweist, wobei jede Zelle eineindeutig mit einem jeweiligen Abschnitt des audiovisuellen Inhalts assoziiert ist, wobei jede Zelle dazu eingerichtet ist, eine Zahl aufzuweisen, und wobei das Endgerät dazu eingerichtet ist:
- wenn ein Abschnitt des Multimedia-Inhalts mittels des elektronischen Lesegeräts gelesen wird, die Zahl, die in der Zelle, die mit dem Abschnitt assoziiert ist, enthalten ist, um einen vorher festgelegten Schritt hochzusetzen oder zu verringern, wobei der vorher festgelegte Schritt mittels eines Berechnungsalgorithmus der Anzahl von durchgeführten Darstellungen gegeben wird oder mittels eine Parameters einer empfangenen Nachricht bereitgestellt wird, und
- mittels des genannten Berechnungsalgorithmus, ausgehend von den in jeder der Zellen der Tabelle gespeicherten Zahlen, die Anzahl von bereits durchgeführten Darstellungen zu berechnen,
wobei das Endgerät dazu eingerichtet ist:
- die Anzahl von Zellen der Tabelle, die eine Zahl aufweisen, die seit dem letzten Darstellen des audiovisuellen Inhalts hochgesetzt oder verringert wurde, zu ermitteln (152; 162), und
- die Anzahl von bereits durchgeführten Darstellungen in Abhängigkeit von dem Ergebnis der Ermittlung zu berechnen (122).

## Claims

1. Method for managing the number of visualizations of an audiovisual content, this method comprising :
- the provision (72) of a digital audiovisual content recorded on a data-recording support, this content being divided into several consecutive time segments which are to be read automatically in a prescribed order,
- the provision (74) of a number of authorized visualizations of this audiovisual content,
- the reading (106) of the recorded audiovisual content by means of an electronic reader, the electronic reader permitting, in particular, backward skips in order to read a preceding segment before the end of the audiovisual content has been reached,
- the calculation (120, 122) of the number of visualizations of the audiovisual content already carried out, and
- the prohibition (130) of any new visualization of the audiovisual content if the number of visualizations already carried out is greater than or equal to the number of authorized visualizations and, if it is not, the authorization of a new visualization of the audiovisual content,
**characterized in that** the method comprises:
- the provision (84) of a table containing as many cells as time segments, each cell being associated in a biunique manner with a respective segment of the audiovisual content, and each cell being suitable for containing a number,
- when a segment of the audiovisual content is read by the electronic reader, the incrementation (114) or the decrementation by a predetermined step of the number contained in the cell associated with this segment, the predetermined step being given by an algorithm for calculating the number of visualizations carried out or provided by a parameter of a received message, and
- the calculation (120; 152; 162; 172) of the number of visualizations already carried out performed by said calculation algorithm on the basis of the numbers recorded in each of the cells of the table, comprising :
- the determination (152; 162) of the number of cells of the table containing a number which has been incremented or decremented since the last visualization of the audiovisual content, and
- the calculation (122) of the number of visualizations already carried out in accordance with the result of this determination.

2. Method according to claim 1, wherein the method comprises:
- the recording (76) in a non-volatile memory of a multiple visualization licence, this licence comprising at least:
• the number of visualizations authorized,
• the table containing the cells associated in a biunique manner with the time segments of the audiovisual content,
• a cryptographic redundancy produced by means of a cryptographic key and of at least a portion of each of the preceding data,
- the verification (88) of the cryptographic redundancy before each new use of the reader in order to visualize the audiovisual content, and
- the prohibition (100) of any new visualization if it has not been possible to verify correctly the cryptographic redundancy.

3. Method according to claim 2, wherein:
- the licence comprises an identifier T_Anti_Reuse of its preceding use,
- a security processor (30) equipped with data storage means containing:
• a cryptographic key which can be used to verify the cryptographic redundancy of the licence and/or a cryptographic key enabling the cryptographic redundancy of the licence to be produced, and
• an identifier C_Anti_Reuse of the preceding use of the licence,
- after each use of the reader to visualize the audiovisual content, the identifiers T_Anti_Reuse and C_Anti_Reuse are modified (142, 144) so that their respective new values correspond, and
- before each new use of the reader to visualize the audiovisual content, the visualization of the audiovisual content is authorized (94) only if the value of the identifier T_Anti_Reuse corresponds to the value of the identifier C_Anti_Reuse.

4. Method according to one of claims 2 or 3, wherein the method comprises the selection (120) of an algorithm for calculating the number of visualizations carried out, to be performed during the calculation of the number of visualizations, in accordance with the content of the licence, from a set of several different calculation algorithms capable of being performed, two calculation algorithms being regarded as different if the content of the cells of the table from which the two algorithms give different results is the same.

5. Method according to any one of the claims 2 to 4, wherein the method comprises:
- the provision of several different audiovisual contents and several licences, each of which licences has an audiovisual content identifier which connects it in a biunique manner to only one of the audiovisual contents, and
- during the calculation of the number of visualizations already carried out, only the data contained in the licence containing the identifier of the audiovisual content currently being read is used for the calculation of the number of visualizations already carried out.

6. Method according to any one of the claims 2 to 5, wherein the method comprises:
- the provision of a security processor suitable for processing ECM messages (Entitlement Control Message) and EMM messages (Entitlement Management Message),
- the transmission (84) of the licence in the form of an EMM message to the security processor, this EMM message containing an identifier of the unique security processor to which it is addressed.

7. Method according to any one of the preceding claims, wherein different segments of the audiovisual content are scrambled with different control words, the method comprising for each segment:
- the transmission (108) of at least one ECM message to a security processor, each ECM message containing:
• a cryptogram of the control word necessary for unscrambling at least a portion of this segment of the audiovisual content, and
• an identifier (C_Id) of the cell of the table which must be incremented or decremented when this ECM message is used to obtain the control word necessary for unscrambling this segment of the audiovisual content,
- the incrementation (114) or decrementation of the number contained in the cell corresponding to the cell identifier contained in the ECM message,
- the decryption (126), by the security processor, of the control word contained in the ECM message transmitted, and
- the transmission (128) of the decrypted control word to an unscrambler in order to unscramble at least a portion of the segment of the audiovisual content.

8. Method according to any one of the preceding claims, wherein, during the calculation of the number of visualizations already carried out, the predetermined step used to increment (114) or decrement the number contained in the cell associated with a segment decreases or increases in accordance with the number of times that this segment has already been visualized.

9. Security processor, **characterized in that** it comprises instructions for performing a method according to any one of the preceding claims, when these instructions are performed by a computer (34).

10. Terminal for reading an audiovisual content, comprising:
- a data-recording support (8) containing the digital audiovisual content recorded, this content being divided into several consecutive time segments which are to be read automatically in a prescribed order,
- a whole number (NVA) of visualizations authorized for this audiovisual content,
- an electronic reader (10) of audiovisual contents permitting, in particular, backward skips in order to read a preceding segment before the end of the audiovisual content has been reached,
- the terminal being suitable:
• for calculating the number of visualizations of this audiovisual content that have already been carried out, and
• for prohibiting any new visualization of the audiovisual content if the number of visualizations already carried out is greater than or equal to the number of visualizations authorized and, if it is not, for authorizing a new visualization of the audiovisual content,
**characterized in that** the terminal comprises a table (Figure 5) containing as many cells as time segments, each cell being associated in a biunique manner with a respective segment of the audiovisual content, each cell being suitable for containing a number, and **in that** the terminal is suitable:
- when a segment of the multimedia content is read by the electronic reader, for incrementing or decrementing by a predetermined step the number contained in the cell associated with this segment, the predetermined step being given by an algorithm for calculating the number of visualizations carried out or provided by a parameter of a received message,and
- for calculating the number of visualizations already carried out from the numbers recorded in each of the cells of this table,
the terminal being suitable for :
- determining (152; 162) the number of cells of the table containing a number which has been incremented or decremented since the last visualization of the audiovisual content, and
- calculating (122) the number of visualizations already carried out in accordance with the result of this determination.
